# EUROPÄISCHE PATENTSCHRIFT

(11) **EP 2 107 647 B1**
(45) Veröffentlichungstag und Bekanntmachung des Hinweises auf die Patenterteilung: **25.12.2013**
(21) Anmeldenummer: 09002979.4
(22) Anmeldetag: 03.03.2009
(51) Int. Cl.: H01R 13/514, H01R 13/66, H01R 13/518, H04Q 1/14, H01R 24/64

(54) **Datentechnik-Verteiler**
Data technology distributor
Répartiteur de données

(30) Priorität: 03.04.2008 DE 102008018171
(43) Veröffentlichungstag der Anmeldung: 07.10.2009
(73) Patentinhaber: Komos GmbH, 07616 Bürgel (DE)
(72) Erfinder: Bürger, Steffen, 07639 Bad Klosterlausnitz (DE); Tanneberger, Gernot, 07616 Bürgel (DE); Klepsch, Jens, 07551 Gera (DE)
(74) Vertreter: Patentanwälte Ruff, Wilhelm, Beier, Dauster & Partner

(56) Entgegenhaltungen:
- WO-A-2004/064205
- DE-B3- 10 339 844
- GB-A- 2 342 792
- US-A1- 2005 159 036
- US-B1- 6 937 461

## Beschreibung

Die Erfindung betrifft einen Datentechnik-Verteiler für den Schrankeinbau, mit Anschlussklemmen zum Auflegen von Kabeladern und wenigstens einer Steckbuchse mit Steckbuchsenkontakten zum Kontaktieren von Datenkabelsteckern und Mitteln zum elektrischen Verbinden der Anschlussklemmen und der Steckbuchsenkontakte, wobei die Mittel zum elektrischen Verbinden von Anschlussklemmen und Steckbuchsenkontakten lösbare Steckverbinder aufweisen.

Bei gattungsgemäßen Datentechnik-Verteilern für den Einbau in 19"-Schränke werden die einzelnen Kabeladern üblicherweise in sogenannte LSA-Anschlussklemmen eingelegt. Bei der löt- und abisolierfreien LSA-Technik werden gleichzeitig mit dem Eindrücken der Kabeladern in die Anschlussklemmen die Kabeladern elektrisch kontaktiert. Eine Verbindung zwischen den Anschlussklemmen und den Steckbuchsenkontakten sorgt dann für den elektrischen Kontakt zu einer Buchse, üblicherweise eine RJ45-Buchse. Problematisch ist bei gattungsgemäßen Datentechnik-Verteilern, dass die Steckbuchse nicht gewechselt werden kann, ohne die Kabeladern erneut in die LSA-Anschlussklemmen einzudrücken. Wenn ein sogenanntes Kabelsharing vorgenommen werden soll, dass also beispielsweise zwei RJ45-Buchsen mit nur acht Kabeladern versorgt werden sollen, erfordert dies grundsätzlich das Neuauflegen der Kabeladern in die LSA-Anschlussklemmen der neuen Einheit, die dann elektrisch mit zwei RJ45-Buchsen verbunden ist. Auch bei einem Defekt einer RJ45-Steckbuchse oder sonstigen Steckbuchse, müssen stets die Kabeladern neu aufgelegt werden. Da in der Regel in Datenschränken wenig Platz zur Verfügung steht, kann dies zu erheblichen Problemen führen, wenn die Kabeladern schlichtweg zu kurz sind, um sie ein zweites Mal aufzulegen.

Aus der deutschen Patentschrift DE 103 39 844 B3 ist ein Verteileranschlussmodul bekannt, bei dem an einer Außenseite eines Gehäuses mehrere Anschlussleisten mit Schneid-Klemm-Kontakten vorgesehen sind. Einander gegenüberliegende Anschlussleisten werden mittels Leiterplatten verbunden, um eine veränderbare Zuordnung zwischen den einzelnen auf die Schneid-Klemm-Kontakte der Anschlussleisten aufgelegten Kabeladern mittels unterschiedlicher Leiterplatten zu erreichen. Die Anschlussleisten weisen einerseits die Schneid-Klemm-Kontakte und andererseits Steckbuchsen auf, wobei mittels der Steckbuchse eine Verbindung mit der jeweiligen Leiterplatte bewirkt wird.

Aus der US-Offenlegungsschrift US 2005/0159036 A1 ist eine sogenannte aktive Steckbuchse bekannt, bei der ein Datenkabel in konventioneller Weise an eine Steckbuchse angeschlossen wird und zusätzlich elektronische Komponenten in der Steckbuchse vorgesehen sind.

Aus dem US-Patent 6,937,461 B1 ist ein Energieteilermodul bekannt, bei dem Energieleitungen mit ersten Steckbuchsen verbunden werden. Je nach dem benötigten Steckgesicht können dann Frontplatten mit weiteren Steckbuchsen in die ersten Steckbuchsen eingesteckt werden, um unterschiedlichste Steckgesichter bereitstellen zu können.
Aus der internationalen Patentveröffentlichung WO 2004/064205 A1 ist eine Verteilervorrichtung bekannt, bei der drei RJ45-Steckbuchsen mittels einer Leiterplatte fest mit einer Anschlussleiste mit mehreren Schneid-Klemm-Kontakten verbunden sind.

Mit der Erfindung soll ein flexibel einzusetzender Datentechnik-Verteiler geschaffen werden.

Erfindungsgemäß ist hierzu ein Datentechnik-Verteiler für Schrankeinbau mit Anschlussklemmen zum Auflegen von Kabeladern und wenigstens einer Steckbuchse mit Steckbuchsenkontakten zum Kontaktieren von Datenkabelsteckern und Mitteln zum elektrischen Verbinden der Anschlussklemmen und der Steckbuchsenkontakte vorgesehen, bei dem die Mittel zum elektrischen Verbinden von Anschlussklemmen und Steckbuchsenkontakten lösbare Steckverbinder aufweisen, wobei die lösbaren Steckverbinder buchsenartige und stiftartige Steckelemente auf, die einerseits in einem Anschlussklemmenblock und andererseits auf einer Leiterplatte vorgesehen sind, wobei der Anschlussklemmenblock und die Leiterplatte mit Führungsmitteln versehen sind, um eine definierte Relativbewegung zwischen Anschlussklemmenblock und Leiterplatte beim Verbinden der stiftartigen und der buchsenartigen Steckelemente sicherzustellen.

Indem die Anschlussklemmen und die Steckbuchsenkontakte unter Zwischenschaltung lösbarer Steckverbinder elektrisch miteinander verbunden sind, kann die elektrische Verbindung zwischen Anschlussklemmen und Steckbuchsenkontakten getrennt werden, beispielsweise um statt RJ45-Steckbuchsen Steckbuchsen anderer Bauform einzusetzen. Der erfindungsgemäße Datentechnik-Verteiler ist dadurch zukunftssicher aufgebaut, da RJ45-Buchsen problemlos durch Buchsen anderer Bauart ersetzt werden können. Bekanntermaßen lassen sich RJ45-Buchsen selbst mit größten Anstrengungen gegen das sogenannte Übersprechen bis maximal 600 MHz betreiben. Die ständig wachsenden zu übertragenden Datenmengen werden aber bereits mittelfristig noch höhere Datenübertragungsraten erfordern, so dass abzusehen ist, dass das RJ45-Steckerformat durch ein anderes Steckerformat ersetzt werden wird, das auch für höhere Frequenzen noch zuverlässig einsetzbar ist. Mit der Erfindung können in Verteilerschränken die im Augenblick noch benötigten RJ45-Verbinder dann einfach ausgetauscht werden, ohne die Kabeladern erneut auflegen zu müssen. Zum Auswechseln einer Steckbuchse werden nämlich lediglich die Steckverbinder getrennt und eine neue Steckbuchse wird eingesteckt und dadurch elektrisch mit den Anschlussklemmen verbunden. Erhebliche Vorteile bietet dies nicht nur beim Wechsel zwischen unterschiedlichen Steckbuchsenformen, sondern beispielsweise auch bei einem Defekt einer Steckbuchse oder dem sogenannten Kabelsharing. Bei einem Defekt der Steckbuchse muss diese lediglich ausgewechselt werden und, da die Kabeladern nicht erneut aufgelegt werden, kann das sogenannte Einmessen entfallen. Gleiches gilt auch dann, wenn acht Kabeladern auf zwei Steckbuchsen verteilt werden. Auch hier kann das beim Neuauflegen der Kabeladern grundsätzlich erforderliche Einmessen der Verbindung entfallen.

Da üblicherweise acht Kabeladern mit acht Steckbuchsenkontakten verbunden werden müssen, steht für jeden der üblicherweise insgesamt acht lösbaren Steckverbinder auch in einem Verteilerschrank nur wenig Platz zur Verfügung. Die stiftartigen Steckelemente sowie die buchsenartigen Steckelemente müssen daher vergleichsweise klein aufgebaut werden, so dass sie zwangsläufig mechanisch empfindlich sind. Um ein exaktes Einführen der stiftartigen Steckelemente in die buchsenartigen Steckelemente zu gewährleisten, sind Führungsmittel vorgesehen, die eine exakte Parallelführung von stiftartigen und buchsenartigen Steckelementen während des Einschiebens gewährleisten. Beispielsweise sind in einem Datentechnik-Verteiler rechteckstreifenförmige Anschlussklemmenblöcke mit buchsenartigen Steckelementen und rechteckstreifenförmige Leiterplatten vorgesehen, die einerseits mit stiftartigen Steckelementen und andererseits mit Steckbuchsen versehen sind. Die Führungsmittel weisen dann beispielsweise am jeweils vorderen und hinteren Ende der Anschlussklemmenblöcke einen Führungsstift auf, der in passende Führungsöffnungen in der Leiterplatte eingreifen kann. Die Kraft zum Einstecken der stiftartigen Steckelemente in die buchsenartigen Steckelemente wird dann durch eine zentrale, zwischen den beiden Führungen angeordnete Schraube aufgebracht, die an der Leiterplatte anliegt und in eine Gewindebuchse im Anschlussklemmenblock eingedreht wird, um die Leiterplatte auf den Anschlussklemmenblock zu zu bewegen und dadurch die lösbaren Steckverbinder in die eingesteckte Position zu bringen.

In Weiterbildung der Erfindung bildet die Leiterplatte zusammen mit wenigstens einer Steckbuchse eine Baueinheit.

Auf diese Weise kann die Steckbuchse fest an der Leiterplatte angeordnet sein und, wie bereits erwähnt wurde, bei Defekt der Steckbuchse oder beim Wechsel auf ein anderes Steckbuchsenformat oder beim Kabelsharing, muss lediglich eine andere Leiterplatte mit Steckelementen und mit den gewünschten Steckbuchsen auf den Anschlussklemmenblock aufgesetzt werden.

In Weiterbildung der Erfindung weist die Leiterplatte ein Abstützteil auf, das zwischen sich und der Leiterplatte einen Raum zur Aufnahme einer Steckbuchse definiert.

Indem die Steckbuchse in einem Raum zwischen Abstützteil und Leiterplatte aufgenommen ist, kann eine mechanische Abstützung der Steckbuchse erfolgen. Darüber hinaus kann das Abstützteil beispielsweise L-artig ausgebildet sein und dadurch als Platzhalter für eine zweite Steckbuchse dienen. Werden an einer Leiterplatte zwei Steckbuchsen vorgesehen, so entfällt das Abstützteil und es wird ein Element mit zwei Steckbuchsen eingesetzt, das etwa die Form des Abstützteils zuzüglich des Raums zwischen Leiterplatte und Abstützteil einnimmt.

In Weiterbildung der Erfindung ist die Leiterplatte mit wenigstens einigen der stiftartigen Steckelemente der lösbaren Steckverbinder versehen und es sind Abstützelemente, insbesondere an einer Haube, vorgesehen, die sich von der Leiterplatte aus gesehen weiter von dieser weg erstrecken als die stiftartigen Steckelemente.

Auf diese Weise kann beim Transport der Leiterplatten mit den stiftartigen Steckelementen und während der Montage sichergestellt werden, dass die stiftartigen Steckelemente nicht versehentlich verbogen oder abgebrochen werden. Wird nämlich die Leiterplatte mit den stiftartigen Steckplatten voran auf einer Fläche abgelegt, so stützt sie sich nicht auf den stiftartigen Steckelementen, sondern auf den Abstützelementen ab. Sämtliche Auflagekräfte werden daher von den Abstützelementen unmittelbar in die Leiterplatte eingeleitet und die stiftartigen Steckelemente selbst bleiben unbelastet und frei.

In Weiterbildung der Erfindung sind der Anschlussklemmenblock oder die Leiterplatte auf einem Schlittenblech angeordnet, das relativ zu einer Grundplatte verschiebbar ist.

Auf diese Weise kann für die Montage, also das Auflegen der Kabeladern und das Einstecken der Leiterplatte in den Anschlussklemmenblock, Platz geschaffen werden. Nach erfolgter Montage kann das Schlittenblech dann in seine endgültige Position gefahren werden, in der üblicherweise die Steckbuchsen, bzw. deren Vorderkanten, bündig mit der Vorderseite des Verteilerschrankes angeordnet sind. Das Vorsehen eines Schlittenblechs erlaubt es auch, Endanschläge für die Verschiebebewegung vorzusehen.

Auf diese Weise kann sichergestellt werden, dass das Schlittenblech mit dem Anschlussklemmenblock während der Montage auch nicht versehentlich zu weit ausgezogen wird, und dadurch Datenkabel beschädigt werden, beispielsweise abgerissen oder gelängt werden.

In Weiterbildung der Erfindung ist der Anschlussklemmblock auf dem Schlittenblech angeordnet, die Leiterplatte bildet mit wenigstens einer Steckbuchse eine Baueinheit und das Schlittenblech ist, ausgehend von einer Endposition, in der die Steckbuchse im Wesentlichen bündig mit einer Frontseite des Verteilers angeordnet ist, von der Frontseite aus in Richtung der Zuführstelle von Kabeladern nach hinten verschiebbar.

Indem das Schlittenblech ausgehend von der Frontseite des Verteilers nach hinten verschiebbar ist, steht während der Montage mehr Kabeladerlänge zur Verfügung, so dass die Montage erleichtert ist. Auch können die Leiterplatten mit den Steckbuchsen problemlos aufgesetzt werden und dann nach vorne in eine rahmenförmige Blende eingefahren werden. Beispielsweise weist das Schlittenblech ein Langloch auf und ist mit einem das Langloch durchsetzenden Haken oder einer Schraube an der Grundplatte befestigt. Auf diese Weise kann durch einfache Mittel sowohl das Schlittenblech an der Grundplatte befestigt werden und gleichzeitig bildet der Haken oder die Schraube mit den jeweiligen Enden des Langlochs zwei Endanschläge.

In Weiterbildung der Erfindung sind Kabelhalteclips zum Aufnehmen von Kabeln vorgesehen, wobei jeder Kabelhalteclip eine flexible Strebe aufweist, an deren Ende eine Kabelschelle angeordnet ist.
Kabelhalteclips werden in Datentechnik-Verteilern üblicherweise vorgesehen, um während der Montage das Datenkabel selbst festzuhalten. Diese Kabelhalteclips sind nicht notwendigerweise zur endgültigen Zugsicherung vorgesehen, eine Zugsicherung sowie eine eventuelle Schirmkontaktierung des Datenkabels erfolgt dann mittels einer Kabelschelle. Bei konventionellen Datentechnik-Verteilern werden solche Kabelschellen als Beipack geliefert. Erfindungsgemäß sind die Kabelschellen an flexiblen Streben vorgesehen und daher bereits am Datentechnik-Verteiler fixiert. Zum Montieren der Kabelschellen müssen daher lediglich die flexiblen Streben gebogen und die Kabelhalteschellen an ihren vorgesehenen Ort gebracht werden. Dies erleichtert die Handhabung der Kabelschellen während der Montage erheblich. Die flexiblen Streben müssen nicht notwendigerweise an Kabelhalteclips vorgesehen sein, sie können auch an einer sonstigen geeigneten Stelle des Verteilers angebracht sein. Wesentlich für die Erfindung ist, dass die Kabelhalteschellen mittels flexibler Streben am Verteiler gehalten werden, so dass ihre Handhabung wesentlich erleichtert wird. Zweckmäßigerweise ist auch eine Befestigungsschraube für die Kabelschelle bereits am Ende der flexiblen Strebe angeordnet. Beispielsweise kann die flexible Strebe an ihrem im nicht montierten Zustand freien Ende eine Öse aufweisen, die von einer Befestigungsschraube durchsetzt wird. Zwischen Öse und Schraubenkopf kann dann die Kabelschelle gesichert sein.

In Weiterbildung der Erfindung ist die flexible Strebe einstückig mit dem Kabelhalteclip ausgebildet, insbesondere einstückig an diesen angespritzt.

Das Vorsehen der flexiblen Streben erfordert dadurch kein zusätzliches Bauteil, sondern kann als Zusatzfunktionalität an den Kabelhalteclips vorgesehen sein.

Weitere Merkmale und Vorteile der Erfindung ergeben sich aus den Ansprüchen und der folgenden Beschreibung einer bevorzugten Ausführungsform der Erfindung im Zusammenhang mit den Zeichnungen. In den Zeichnungen zeigen:
- Fig. 1: eine Ansicht eines erfindungsgemäßen Datentechnik-Verteilers von schräg oben im teilweise montierten Zustand,
- Fig. 2: eine vergrößerte Teilansicht des Datentechnik-Verteilers der Fig. 1,
- Fig. 3: eine der Fig. 2 entsprechende Ansicht im weiter demontierten Zustand,
- Fig. 4: eine der Fig. 2 entsprechende Ansicht im noch weiter demontier- ten Zustand,
- Fig. 5: eine Ansicht von schräg oben auf einen Anschlussklemmen- blocks mit aufgesetzter Leiterplatte und Steckbuchse,
- Fig. 6: die Leiterplatte mit Steckbuchse der Fig. 5 von schräg unten oh- ne Anschlussklemmenblock,
- Fig. 7: die Leiterplatte der Fig. 6 bei abgenommener Haube und abge- nommenem Abstützteil,
- Fig. 8: den Anschlussklemmenblock aus Fig. 5 bei abgenommener Lei- terplatte,
- Fig. 9: eine Anschlussklemme, wie sie im Anschlussklemmenblock der Fig. 8 vorgesehen ist,
- Fig. 10: eine Schnittansicht durch einen Anschlussklemmenblock und eine Steckbuchse des Datentechnik-Verteilers der Fig. 1,
- Fig. 11: eine weitere teilweise Ansicht des Datentechnik-Verteilers der Fig. 1 im teilweise montierten Zustand und
- Fig. 12: eine Ansicht des Datentechnik-Verteilers der Fig. 1, wobei eine Einheit mit zwei Steckbuchsen vorgesehen ist.

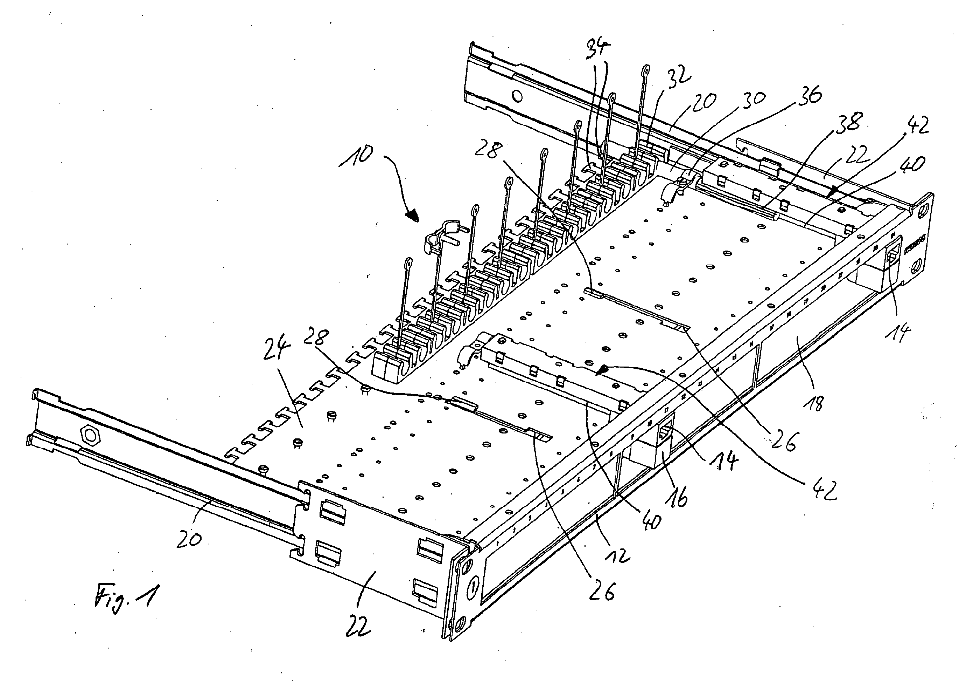

Die Darstellung der Fig. 1 zeigt einen Datentechnik-Verteiler 10, der für einen Schrankeinbau vorgesehen ist und schubladenartig ausgebildet ist. Der Datentechnik-Verteiler 10 weist eine Frontplatte 12 auf, die mit Aussparungen zum Aufnehmen von Steckbuchsen 14 ausgebildet ist. Insgesamt sind in der Frontplatte 12 drei gleich große, nebeneinander angeordnete Aussparungen angeordnet, die jeweils für acht nebeneinander angeordnete Steckbuchsen 14 ausgelegt sind. In den Aussparungen können zwei Steckbuchsen 14 übereinander angeordnet werden, wobei in der Darstellung der Fig. 1 jeweils eine Steckbuchse 14 dargestellt ist, die jeweils zusammen mit einem Abstützteil 16, dessen Funktion nachstehend noch detailliert erläutert wird, die Höhe der Aussparung ausfüllt.

Die Frontplatte 12 ist mit einer Grundplatte 18 verbunden, die in der Darstellung der Fig. 1 lediglich in ihrem vorderen Bereich erkennbar ist. Diese Grundplatte 18 wird in zwei seitliche Führungen 20 eingesetzt, die dann wiederum in Gleitführungen am Schrank gelagert sind und die damit ausziehbar am Schrank befestigt sind. An den Schienen 20 ist am jeweiligen vorderen Ende ein Befestigungswinkel 22 befestigt, an dem die Frontplatte 12 zur Befestigung des Datentechnik-Verteilers 10 angeschraubt werden kann. Der gesamte Datentechnik-Verteiler 10 ist damit schubladenartig aus einem Verteilerschrank herausziehbar und wieder in diesen einschiebbar. Zum Einschieben und Ausziehen kann die Frontplatte 12 an die Winkel 22 angeschraubt bleiben. Lediglich zum vollständigen Entnehmen bzw. beim Neueinbau des Datentechnik-Verteilers 10 muss die Frontplatte 12 von dem Winkel 22 gelöst sein.

Auf der Grundplatte 18 ist verschiebbar eine Schlittenplatte 24 angeordnet, die gegenüber der Grundplatte 18 parallel zur Auszugsrichtung der Führungen 20 um eine begrenzte Länge verschiebbar ist.

Die Schlittenplatte 24 ist mit zwei parallel zueinander und parallel zu den Führungsschienen 20 verlaufenden Langlöchern 26 versehen. In diese Langlöcher 26 greift jeweils ein Haken 28 ein, der mit der Grundplatte 18 verbunden ist und speziell mittels einer hakenartig hochgebogenen Ausstanzung der Grundplatte 18 gebildet ist. Die Langlöcher 26 weisen an ihrem, der Frontplatte 12 zugewandten Ende eine Verbreiterung auf, durch die der Haken 28 durchgeführt werden kann. In einer, gegenüber der in Fig. 1 dargestellten Position von der Frontplatte 12 zurückversetzten Position der Schlittenplatte 24 kann diese daher auf die Grundplatte 18 aufgesetzt werden, so dass die Haken 28 durch die verbreiterten Abschnitte der Langlöcher 26 hindurch treten. Wird die Schlittenplatte 24 dann nach vorne, in Richtung auf die Frontplatte 12 verschoben, übergreifen die Haken 28 jeweils eine Berandung der Langlöcher 26 und halten die Schlittenplatte 24 dadurch längsverschiebbar an der Grundplatte 18. Die in Fig. 1 dargestellte Stellung der Schlittenplatte 24 stellt deren Endposition dar, in der die Vorderseite der Steckbuchsen 14 im Wesentlichen bündig mit der Vorderseite der Frontplatte 12 ist. Eine demgegenüber von der Frontplatte 12 zurückversetzte Position der Schlittenplatte 24 dient zur Montage, speziell dem Auflegen der Kabeladern und dem Einbau der Einheit 42, wie nachfolgend noch erläutert wird. Nach dem Anbringen der Steckbuchsen 14 kann die Schlittenplatte 24 dann nach vorne in Richtung der Frontplatte 12 verschoben werden, so dass die Steckbuchsen 14 und die Abstandshalter 16 von hinten abschnittsweise durch die Aussparungen in der Frontplatte 12 hindurch treten und dann im Wesentlichen bündig mit deren Vorderkante angeordnet sind, wie in Fig. 1 dargestellt ist.

Ein anzuschließendes Datenkabel 30 ist in der Darstellung der Fig. 1 schematisch dargestellt und wird zur Montage zunächst in Kabelhalteclips 32 eingelegt, die das Datenkabel 30 während der Montage halten. Im fertig montierten Zustand wird eine Zugsicherung an Vorsprüngen 34 angebracht, die an dem, der Frontplatte 12 gegenüberliegenden Ende der Schlittenplatte 24 T-artig ausgeformt sind. Als Zugsicherung kann beispielsweise ein konventioneller Kabelbinder dienen. Auf der, den Vorsprüngen 34 gegenüberliegenden Seite der Kabelhalteclips 32 kann eine Kabelschirmkontaktierungsschelle 36 angeordnet werden, die mit einem Gewindebolzen an der Schlittenplatte 24 befestigt und dadurch auch gleichzeitig elektrisch mit dieser verbunden wird. Von der Kabelschirmkontaktierungsschelle 36 ausgehend und in Richtung auf die Frontplatte 12 zu gesehen sind schematisch Kabeladern 38 des Datenkabels 30 zu erkennen, die dann, wie noch erläutert wird, in einen Anschlussklemmenblock 40 eingelegt werden, der fest mit der Schlittenplatte 24 verbunden ist. Auf den Anschlussklemmenblock 40 wird dann eine Einheit 42 aufgesetzt, die aus einer Leiterplatte, einer Haube, der Steckbuchse 40 und dem Abstützteil 16 besteht, wie nachfolgend ebenfalls noch erläutert wird.

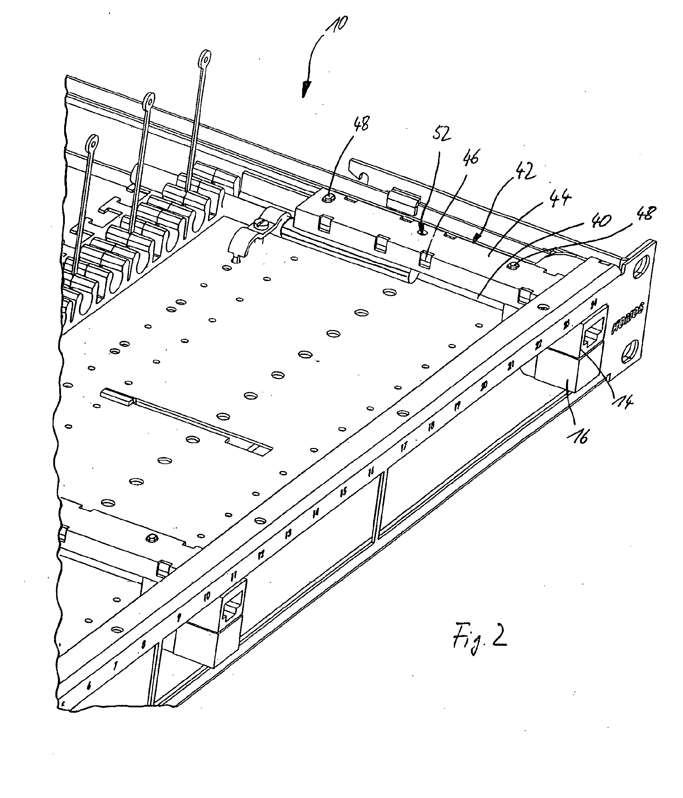

In der Darstellung der Fig. 2 ist der Datentechnik-Verteiler 10 vergrößert und abschnittsweise dargestellt. Die Einheit 42 weist eine Haube 44 auf, unter der eine Leiterplatte 46 angeordnet ist, die wiederum mit in der Darstellung der Fig. 2 nicht erkennbaren Steckern versehen ist und mit diesen Steckern in passende Buchsen im Anschlussklemmenblock 40 eingeschoben ist. An dieser Leiterplatte 46 sind auch das Abstützteil 16 und die Steckbuchse 14 befestigt. Die Haube 44 weist zwei Durchgangsöffnungen auf, die jeweils von einem Führungsstift 48 durchsetzt werden, wobei die Führungsstifte 48 jeweils einstückig mit dem Anschlussklemmenblock 40 verbunden sind. Wie nachstehend noch erläutert wird, dienen die Führungsstifte 48 in Zusammenwirkung mit passenden Durchgangsöffnungen in der Leiterplatte 46 und der Haube 44 dazu, beim Aufsetzen der Einheit 42 auf den Anschlussklemmenblock 40 eine definierte und im Wesentlichen parallele Ausrichtung von Leiterplatte 46 und Anschlussklemmenblock 40 sicherzustellen.

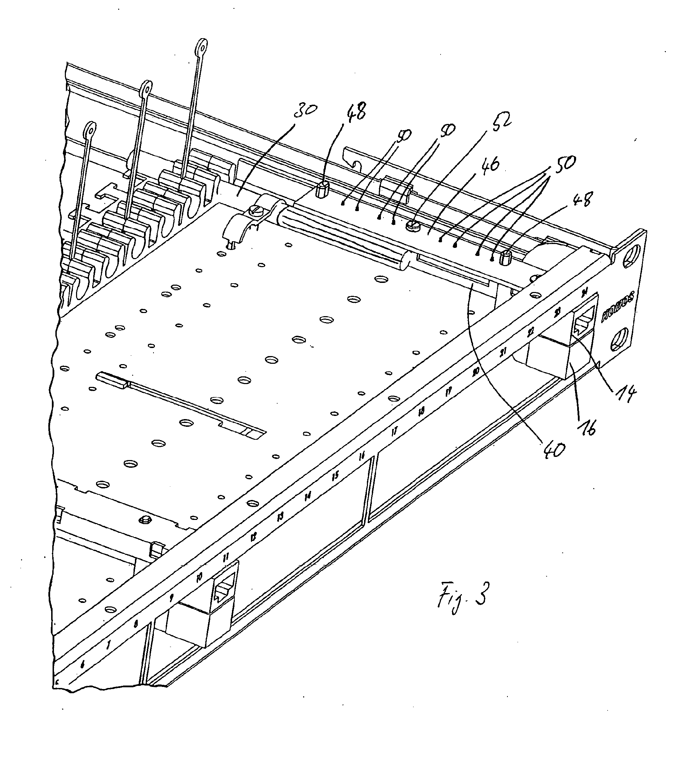

Die Darstellung der Fig. 3 zeigt eine der Fig. 2 entsprechende Ansicht, wobei die Haube 44 abgenommen ist. Zu erkennen ist nun die Leiterplatte 46, sowie die Rückseiten der in der Leiterplatte angeordneten Stifte 50. Insgesamt sind acht Stifte 50 vorgesehen, entsprechend der üblichen Anzahl von acht Kabeladern im Datenkabel 30. Die beiden Führungsstifte 48 erstrecken sich, wie bereits erwähnt wurde, durch passende Durchgangsöffnungen in der Leiterplatte 46 hindurch. Beim Aufsetzen der Leiterplatte 46 mit den Stiften 50 auf den Anschlussklemmenblock 40 wird ein definiertes aufeinander zu bewegen von Leiterplatte 46 und Anschlussklemmenblock 40 auch dadurch sichergestellt, dass die Kraft, die benötigt wird, um die Stifte 50 in passende Buchsen im Anschlussklemmenblock 40 einzustecken, mittels einer zentralen Schraube 52 aufgebracht wird, die exakt mittig zwischen den beiden Führungsstiften 48 angeordnet ist und in eine Gewindebohrung im Anschlussklemmenblock 40 eingreift. Die zentrale Schraube 52 liegt auf der Oberseite der Leiterplatte 46 auf und an der Unterseite der Haube 44 an. Durch Eindrehen der Schraube 52 wird die Leiterplatte 46 gegen den Anschlussklemmenblock 40 gezogen und gleichzeitig dringen dann die Stifte 50 in die passenden Buchsen im Anschlussklemmenblock 40 ein, durch Herausdrehen der Schraube kann die Einheit 42 vom Anschlussklemmenblock 40 abgezogen werden.

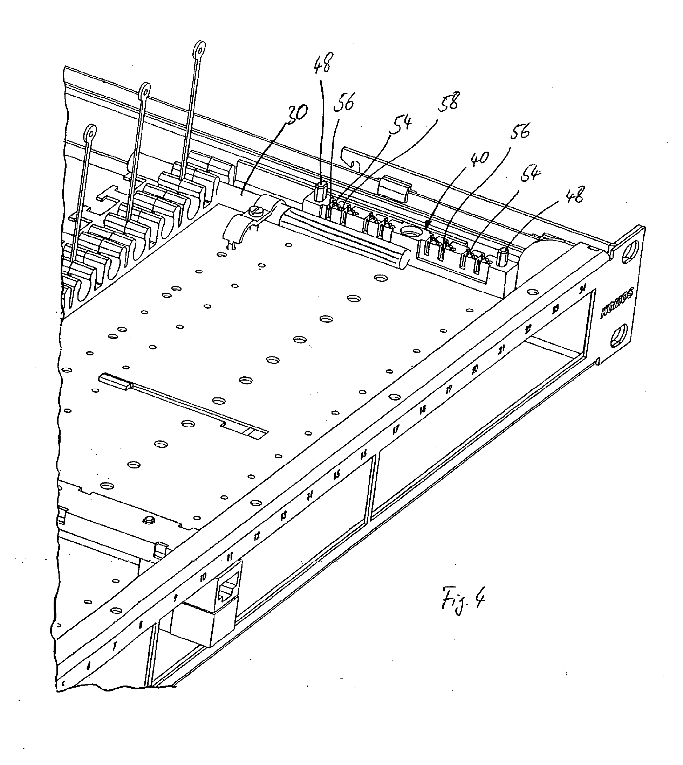

Die Darstellung der Fig. 4 zeigt eine der Darstellung der Fig. 2 und 3 vergleichbare Ansicht, wobei die Einheit 42 mit Leiterplatte 46, Steckbuchse 14, Abstützteil 16 und Haube 44 nicht dargestellt ist. Die Darstellung der Fig. 4 zeigt somit den Zustand, der zum Auflegen der Kabeladern des Datenkabels 30 vorliegen muss. Zu erkennen ist, dass der Anschlussklemmenblock 40 insgesamt acht Anschlussklemmen 54 aufweist, die jeweils schräg zu einem Querschlitz im Anschlussklemmenblock 40 angeordnet sind. Die Anschlussklemmen 54 sind als sogenannte LSA-Anschlussklemmen ausgebildet, so dass beim Einlegen und Eindrücken einer Kabelader in einen jeweiligen quer laufenden Schlitz des Anschlussklemmenblocks 40 die Isolierung der Kabelader durchtrennt wird und gleichzeitig mit dem Einlegen eine elektrische Kontaktierung zwischen Anschlussklemme 54 und Kabelader hergestellt wird.

Die quer verlaufenden Schlitze im Anschlussklemmenblock 40 sind mit Vorsprüngen 56 versehen, die die Kabelader an ihrer Isolierung angreifen und dadurch in dem Schlitz sichern. Jede Anschlussklemme 54 ist mit einem Steckbuchsenabschnitt versehen, der in der Darstellung der Fig. 4 nicht zu erkennen ist. Dieser Steckbuchsenabschnitt liegt jeweils unterhalb einer Bohrung 58 im Anschlussklemmenblock 40, wobei diese Bohrung 58 mit einem Montageschlitz für die Anschlussklemme 54 verbunden ist. Die Steckstifte 50 an der Leiterplatte 46 können in diese Bohrungen 58 eingeschoben werden und gleichzeitig mit dem Einschieben wird ein elektrischer Kontakt zwischen den Anschlussklemmen 54 und den Steckstiften 50 auf der Leiterplatte 46 hergestellt. Da die Steckstifte 46 gleichzeitig elektrisch mittels Leiterbahnen mit den einzelnen Steckbuchsenkontakten der Steckbuchse 14 verbunden sind, wird durch einfaches Aufsetzen der Leiterplatte 46 auf den Anschlussklemmenblock 40 eine elektrische Verbindung zwischen den einzelnen Steckbuchsenkontakten der Steckbuchse 14 und den auf den Anschlussklemmenblock 40 aufgelegten Kabeladern des Datenkabels 30 hergestellt. Wie bereits erläutert wurde, sorgen die Führungsstifte 48 am Anschlussklemmenblock 40 während des Aufsetzens der Leiterplatte 46 bzw. der Einheit 42 aus Leiterplatte 46, Steckbuchse 14 und Haube 44 dafür, dass die Steckstifte 50 nicht relativ zu den Anschlussklemmen 54 verkanten, sondern exakt parallel zu den jeweiligen Bohrungen in diese eingeführt werden.

Indem nun die Steckbuchsen 14 lösbar mit den Kabeladern des Datenkabels 30 verbunden sind, ergeben sich zahlreiche Vorteile. Zum einen steht beim Auflegen der Kabeladern auf den Anschlussklemmenblock 40 gegenüber konventionellen Datentechnik-Verteilern mehr Platz zur Verfügung, da die Steckbuchsen 14 sich noch nicht im Verteiler selbst befinden müssen. Vor allem aber kann die Steckbuchse 14 in einfacher Weise ausgewechselt werden. Ersichtlich muss hierzu lediglich die Einheit 42 vom Anschlussklemmenblock 40 abgezogen werden und durch eine andere Einheit 42 ersetzt werden. Dies kann nicht nur dann erforderlich sein, wenn beispielsweise eine Steckbuchse 14 beschädigt ist. Dies kann vor allem dann erforderlich sein, wenn ein vorhandener Datentechnik-Verteiler auf ein neues Steckbuchsenformat umgerüstet werden soll. In beiden Fällen ist lediglich das Austauschen der Einheit 42 erforderlich und ein erneutes Auflegen der Kabeladern des Datenkabels 30 auf den Anschlussklemmenblock 40 kann entfallen. Dies ist vor allem deshalb vorteilhaft, da beim Austausch der Einheit 42 mit der Steckbuchse 14 kein erneutes Einmessen der Verbindung erforderlich ist. Darüber hinaus muss das Datenkabel 30 im Unterschied zu konventionellen Datentechnik-Verteilern nicht ein Stück weit in den Verteiler hineingezogen werden, um genügend Kabellänge für ein erneutes Auflegen der Kabeladern zur Verfügung zu haben. Der erfindungsgemäße Datentechnik-Verteiler ist dadurch zukunftssicher gestaltet, da die Steckbuchsen 14, die üblicherweise als RJ45-Steckbuchsen ausgebildet sind, problemlos und ohne ein erneutes Auflegen der Kabeladern zu erfordern gegen ein anderes Steckbuchsenformat ausgetauscht werden können.

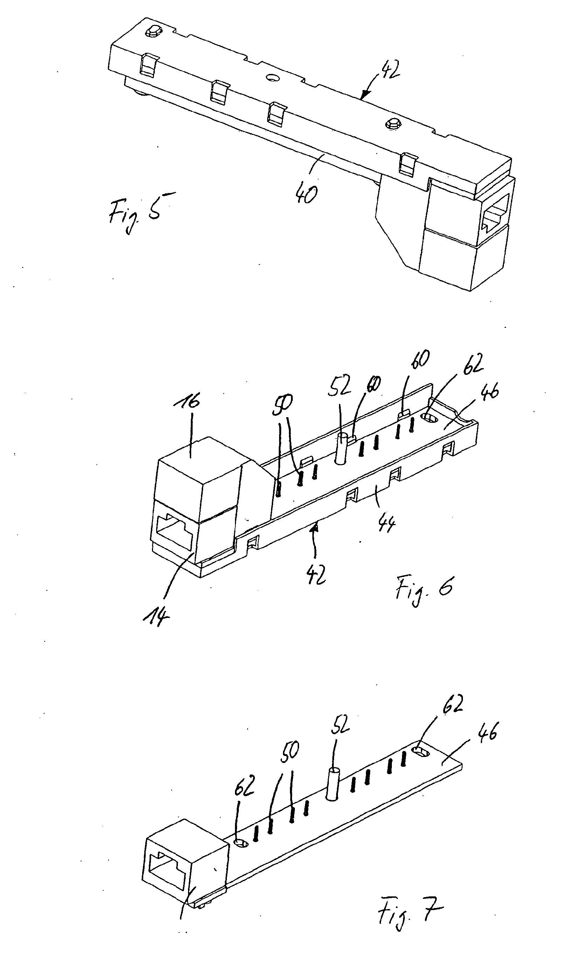

Die Darstellung der Fig. 5 zeigt die Einheit 42 im aufgesetzten Zustand auf den Anschlussklemmenblock 40 in isolierter Darstellung. In der Darstellung der Fig. 6 ist die Einheit 42 alleine von schräg unten dargestellt und es ist zu erkennen, dass die Leiterplatte 46 in die Haube 44 eingeklipst und mittels mehrerer Rastvorsprünge 60 in der Haube 44 gehalten wird. Zu erkennen ist in der Darstellung der Fig. 6 auch, dass die Schraube 52 mittig zwischen Durchgangsöffnungen 62 in der Leiterplatte 46, die zum Aufnehmen der Führungsstifte 48 dienen, sowie mittig zwischen zwei Gruppen von je vier Steckstiften 50 angeordnet ist. Nachdem die Einheit 42 auf den Anschlussklemmenblock 40 aufgesetzt ist, kann dadurch die Einheit 42 durch Eindrehen der Schraube 52 in den Anschlussklemmenblock 40 so auf den Anschlussklemmenblock 40 zu bewegt werden, dass die Leiterplatte 46 parallel zur Oberseite des Anschlussklemmenblocks 40 bleibt und die Steckstifte 50 parallel in die Bohrungen 58 im Anschlussklemmenblock 40 eingeführt werden.

In der Darstellung der Fig. 6 ist auch zu erkennen, dass die Steckbuchse 14 unmittelbar auf der Unterseite der Leiterplatte 46 angeordnet ist. Die Steckstifte 50 und die einzelnen Steckbuchsenkontakte der Steckbuchse 14 werden mittels in der Darstellung der Fig. 6 nicht dargestellter Leiterbahnen verbunden. Um die Steckbuchse 14 mechanisch abzustützen, ist das Abstützteil 16 vorgesehen, das insgesamt L-förmig gestaltet ist und wie die Steckbuchse 14 auf der Unterseite der Leiterplatte 46 befestigt ist. Zwischen dem Abstützteil 16 und der Unterseite der Leiterplatte 46 ist ein Zwischenraum definiert, der im montierten Zustand durch die Steckbuchse 14 ausgefüllt wird. Die Steckbuchse 14 kann mittels des Abstützteils 16 daher mechanisch abgestützt werden. Darüber hinaus dient das Abstützteil 16 als Platzhalter. Sollen im Rahmen des sogenannten Kabelsharing zwei Steckbuchsen 14 auf einer Leiterplatte 46 angeordnet werden, so werden das Abstützteil 16 und die Steckbuchse 14 durch ein Element ersetzt, das eine Doppelsteckbuchse aufweist. Ein sogenanntes Kabelsharing wird beispielsweise vorgenommen, wenn die acht Kabeladern eines Datenkabels auf zwei Steckbuchsen aufgeteilt werden sollen, da für die jeweiligen Anschlüsse lediglich vier Kabeladern benötigt werden, beispielsweise ein Telefonanschluss und ein Faxanschluss.

Die Darstellung der Fig. 7 zeigt die Leiterplatte 46 erneut in einer der Fig. 6 vergleichbaren Ansicht, wobei das Abstützteil 16 und die Haube 44 abgenommen wurden. Sehr gut ist in der Darstellung der Fig. 7 zu erkennen, dass die beiden Durchgangsöffnungen 62 zum Aufnehmen der Führungsstifte 48 des Anschlussklemmenblocks 40 und die Kontaktstifte 50 sowie die Schraube 52 im Wesentlichen in einer Linie liegen und die Schraube 52, die Kontaktstifte 50 und die Durchgangsöffnungen 62 symmetrisch angeordnet sind.

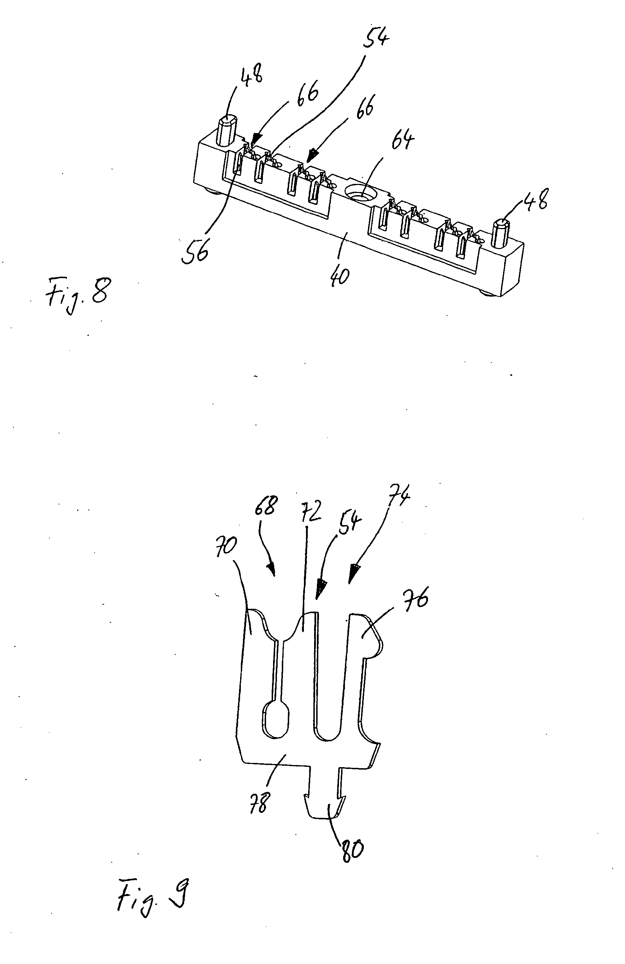

Die Darstellung der Fig. 8 zeigt den Anschlussklemmenblock 40 in einer der Fig. 5 entsprechenden Lage, wobei die Einheit 42 abgenommen ist. Der Anschlussklemmenblock 40 weist etwa die Form eines langgestreckten, rechteckigen Quaders auf, an dessen vorderen und hinteren Ende jeweils einer der Führungsstifte 48 nach oben abragt. In der Mitte zwischen den beiden Führungsstiften 48 ist eine Gewindebuchse 64 angeordnet, in die die Schraube 52 eingedreht werden kann. Senkrecht zur Längsachse des Anschlussklemmenblocks 40 sind insgesamt acht Querschlitze 66 eingebracht, wobei jeder Querschlitz 66 zum Aufnehmen einer Kabelader dient. Wie bereits erläutert wurde, sind die Querschlitze 66 mit in den jeweiligen Schlitz teilweise vorragenden Vorsprüngen 56 versehen, um eine jeweilige Kabelader im Schlitz zu halten. Darüber hinaus sind schräg zu jedem Schlitz 66 die Anschlussklemmen 54 angeordnet.

Die Darstellung der Fig. 9 zeigt in vergrößerter Darstellung eine Anschlussklemme 54. Jede Anschlussklemme 54 weist einen Abschnitt 68 auf, der einen Schlitz zum Durchschneiden der Isolierung einer jeweiligen Kabelader definiert. Die Anschlussklemme 54 weist insgesamt etwa die Form einer Gabel mit drei Zinken auf, wobei die einander zugewandten Kanten von Zinken 70, 72 den Schlitz des Abschnitts 68 definieren. Weiterhin weist jede Anschlussklemme 54 einen Abschnitt 74 auf, der eine Steckbuchse zum Kontaktieren der Steckstifte 50 an der Leiterplatte 46 definiert. Diese Steckbuchse wird durch die einander zugewandten Kanten des mittleren Zinkens 72 und des in der Darstellung der Fig. 9 rechten Zinkens 76 gebildet. Zwischen diesen Zinken ist eine U-förmige Ausnehmung gebildet, die sich zu ihrem Grund hin geringfügig verengt.

Die Zinken 70, 72, 76 der Anschlussklemme 54 sind mittels einer Basis 78 miteinander verbunden. Auf der, den Zinken 70, 72, 76 gegenüberliegenden Seite der Basis 78 ragt ein Stift 80 ab, der an seinem, der Basis 78 abgewandten freien Ende verbreitert und mit einem Widerhaken versehen ist. Der Stift 80 wird in einen passenden Schlitz im Anschlussklemmenblock 40 eingeschoben und sorgt mittels des Widerhakens dafür, dass die Anschlussklemme 54 sicher im Anschlussklemmenblock 40 verankert ist.

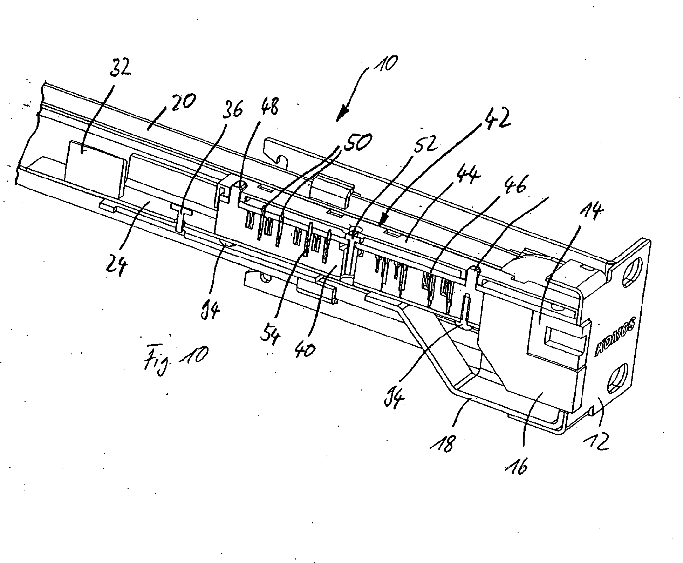

Die Schnittansicht der Fig. 10 lässt den Aufbau des erfindungsgemäßen Datentechnik-Verteilers 10 genauer erkennen. Die Grundplatte 18 ist an den seitlichen Führungsschienen 20 befestigt und fest mit der Frontplatte 12 verbunden. In ihrem vorderen, der Frontplatte 12 zugewandten Bereich ist die Grundplatte 18 schräg nach unten abgewinkelt, um im Bereich ihres Endes dann wieder horizontal zu verlaufen. Auf diese Weise wird im Bereich der Frontplatte 12 oberhalb der Grundplatte 18 Platz für die Anordnung der Steckbuchse 14 und des Abstützteils 16 oder für die Anordnung von zwei Steckbuchsen übereinander geschaffen. Auf der Grundplatte 18 ist parallel zu den Führungsschienen 20 die Schlittenplatte 24 angeordnet. In der Darstellung der Fig. 10 zu erkennen ist ein Abschnitt einer Kabelschirmkontaktierungsschelle 36, die sich mit einem Vorsprung durch die Schlittenplatte 24 und in ein Langloch der Grundplatte 18 hinein erstreckt.

Weiterhin ist zu erkennen, dass der Anschlussklemmenblock 40 mittels zweier Schrauben 94 von der Unterseite der Schlittenplatte 24 her an dieser befestigt ist. Anhand der beiden Schrauben 94 ist auch zu erkennen, dass die Schnittebene der Fig. 10 nicht parallel zu den Führungsschienen 20 verläuft, sondern sich der Abstand der Schnittebene zur Frontplatte 12 hin geringfügig verringert.

Wie bereits erläutert wurde, ist die Leiterplatte 46 mit den Kontaktstiften 50 in den Anschlussklemmenblock 40 und dessen Anschlussklemmen 54 eingesteckt. Die beiden Führungsstifte 48 des Anschlussklemmenblocks 40 erstrecken sich durch die Leiterplatte 46 sowie durch die Haube 44 hindurch. Die Schraube 52, mit der die Leiterplatte 46 gegen den Anschlussklemmenblock 40 gezogen wird, liegt mit ihrem Schraubenkopf auf der Leiterplatte 46 auf und der Schraubenkopf ist teilweise durch die darüber angeordnete Haube 44 verdeckt. Dennoch kann durch eine zentrisch zur Schraube 52 angeordnete Durchgangsöffnung die Schraube 52 betätigt werden. Auf diese Weise kann bei aufgesetzter Haube 44 die Leiterplatte gegen den Anschlussklemmenblock 40 gezogen werden und beim Herausdrehen der Schraube 52 stützt sich deren Kopf an der Unterseite der Haube 44 ab und bewegt dadurch sowohl die Haube als auch die in die Haube eingeklipste Leiterplatte 46 mit den Stiften 50 vom Anschlussklemmenblock 40 weg und zieht dadurch die Stifte 50 aus den Anschlussklemmen 54 heraus.

Wie in Fig. 10 zu erkennen ist, kann die Einheit 42 aus Leiterplatte 46, Haube 44, Abstützteil 16 und Steckbuchse 14 nicht in der dargestellten Endposition vom Anschlussklemmenblock 40 abgezogen werden, da die Steckbuchse 14 mit ihrem Vorderabschnitt genau wie das Abstützteil 16 innerhalb der Aussparung der Frontplatte 12 aufgenommen sind. Um die Einheit 42 vom Anschlussklemmenblock 14 abzunehmen, muss daher zunächst das Schlittenblech 24, ausgehend von der in Fig. 10 dargestellten Position, nach hinten, von der Frontplatte 12 weg in Richtung der Kabelclips 32 verschoben werden. Dadurch wird die komplette Einheit 42 nach oben hin frei und durch Herausdrehen der Schraube 52 kann die Einheit 42 vom Anschlussklemmenblock 40 gelöst und dann abgenommen werden.

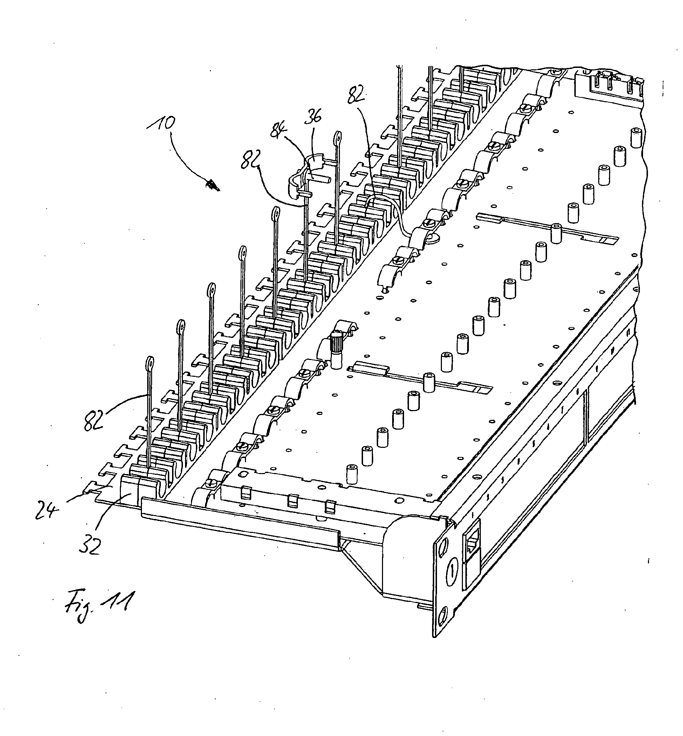

Die Darstellung der Fig. 11 zeigt eine weitere abschnittsweise und vergrößerte Darstellung des Datentechnik-Verteilers 10. Es ist zu erkennen, dass die Kabelhalteclipse 32 mit von diesen abragenden Streben 82 versehen sind, die an ihrem freien Ende jeweils mit einer Öse versehen sind. Die Streben 82 sind aus flexiblem Material gebildet, so dass die Streben 82, wie in Fig. 11 zu erkennen ist, gebogen werden können. Die Streben 82 sind einstückig an die Kabelhalteclipse 32 angespritzt und bestehen wie diese aus Kunststoff. Die an jeder Strebe 82 angebrachte Öse dient zur Anordnung einer Kabelschirmkontaktierungsschelle 36, die mittels einer durch die Öse durchgesteckten Schraube 84 an der Strebe 82 gehalten wird. Im montierten Zustand werden die Kabelschirmkontaktierungsschellen 36, wie in Fig. 11 zu erkennen ist, auf der Schlittenplatte 24 befestigt und sorgen dadurch für einen elektrischen Kontakt einer Schirmung des Datenkabels 30 mit der Schlittenplatte 24. Durch Vorsehen der flexiblen Streben 82 können die Kabelschirmkontaktierungschellen 36 bereits im vormontierten Zustand am Datentechnik-Verteiler 10 gehalten werden und müssen nicht, wie bei konventionellen Datentechnik-Verteilern, als Beipack geliefert und vor der Montage mühsam aufgesetzt werden. Das Vorsehen der flexiblen Streben 82 mit den daran befestigten Kabelschirmkontaktierungsschellen 36 erleichtert daher die Montage des erfindungsgemäßen Datentechnik-Verteilers erheblich.

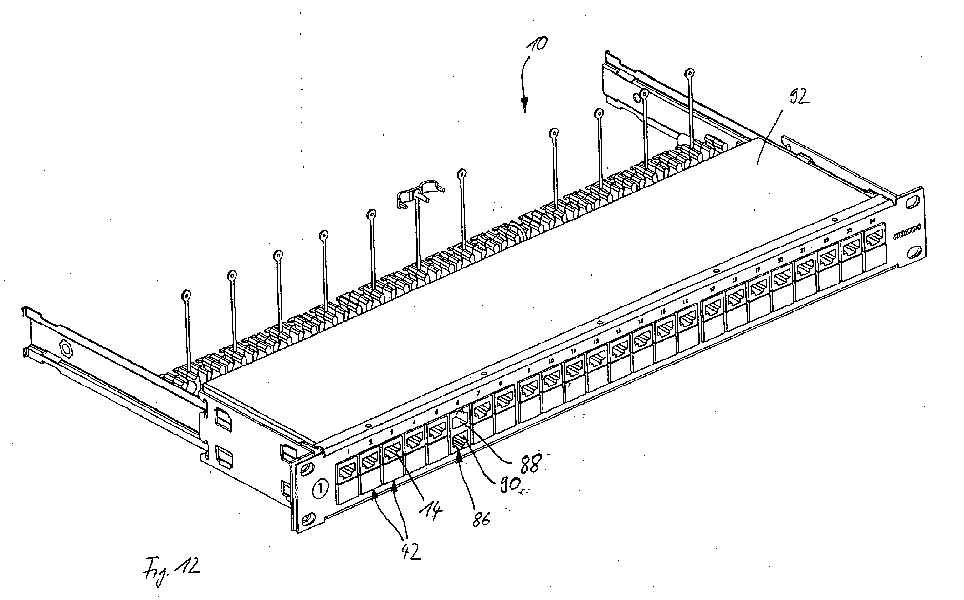

Die Darstellung der Fig. 12 zeigt den erfindungsgemäßen Datentechnik-Verteiler 10 erneut in einer Ansicht von schräg oben, wobei eine Abdeckplatte 92 aufgesetzt ist. Im Unterschied zur Darstellung der Fig. 1 ist neben insgesamt 23 Einheiten 42 mit jeweils einer Steckbuchse 14 weiter eine Einheit 86 vorgesehen, die neben einer oberen Steckbuchse 88 anstelle des Abstützteils 16 eine weitere Steckbuchse 90 aufweist. Die acht Kabeladern eines Datenkabels können dadurch auf die beiden Steckbuchsen 88, 90 aufgeteilt werden. Wie bereits erwähnt wurde, kann die Einheit 86 mit der Doppelsteckbuchse 88, 90 in einfacher Weise gegen eine Einheit 42 mit lediglich einer Steckbuchse 14 ausgetauscht werden, ohne dass ein erneutes Auflegen der Kabeladern auf den Anschlussklemmenblock 40 erforderlich ist.

## Patentansprüche

1. Datentechnik-Verteiler für Schrankeinbau, mit Anschlussklemmen (54) zum Auflegen von Kabeladern und wenigstens einer Steckbuchse (14) mit Steckbuchsenkontakten zum Kontaktieren von Datenkabelsteckern und Mitteln zum elektrischen Verbinden der Anschlussklemmen (54) und der Steckbuchsenkontakte, wobei die Mittel zum elektrischen Verbinden von Anschlussklemmen (54) und Steckbuchsenkontakten lösbare Steckverbinder aufweisen, **dadurch gekennzeichnet, dass** die lösbaren Steckverbinder buchsenartige und stiftartige Steckelemente (74, 50) aufweisen, die einerseits in einem Anschlussklemmenblock (40) und andererseits auf einer Leiterplatte (46) vorgesehen sind, wobei der Anschlussklemmenblock (40) und die Leiterplatte (46) mit Führungsmitteln (48, 62) versehen sind, um eine definierte Relativbewegung zwischen Anschlussklemmenblock (40) und Leiterplatte (46) beim Verbinden der stiftartigen und der buchsenartigen Steckelemente (74, 50) sicherzustellen.

2. Datentechnik-Verteiler nach Anspruch 1, **dadurch gekennzeichnet, dass** die Leiterplatte (46) zusammen mit wenigstens einer Steckbuchse (14) eine Baueinheit bildet.

3. Datentechnik-Verteiler nach Anspruch 2, **dadurch gekennzeichnet, dass** die Leiterplatte (46) ein Abstützteil (16) aufweist, das zwischen sich und der Leiterplatte (46) einen Raum zur Aufnahme einer Steckbuchse (14) definiert.

4. Datentechnik-Verteiler nach wenigstens einem der vorstehenden Ansprüche, **dadurch gekennzeichnet, dass** die Leiterplatte (46) mit wenigstens einigen der stiftartigen Steckelemente (50) der lösba-ren Steckverbinder versehen ist und Abstützelemente, insbesondere an einer Haube (44), vorgesehen sind, die sich von der Leiterplatte (46) aus gesehen weiter von dieser weg erstrecken als die stiftartigen Steckelemente (50).

5. Datentechnik-Verteiler nach einem der vorstehenden Ansprüche, **dadurch gekennzeichnet, dass** der Anschlussklemmenblock (40) oder die Leiterplatte (46) auf einem Schlittenblech (24) angeordnet sind, das relativ zu einer Grundplatte (18) verschiebbar ist.

6. Datentechnik-Verteiler nach Anspruch 5, **dadurch gekennzeichnet, dass** der Anschlussklemmenblock (40) auf dem Schlittenblech (24) angeordnet ist, die Leiterplatte (46) mit wenigstens einer Steckbuchse (14) eine Baueinheit bildet und das Schlittenblech (24) ausgehend von einer Endposition, in der die Steckbuchse (14) im wesentlichen bündig mit einer Frontseite des Verteilers angeordnet ist, von der Frontseite aus in Richtung der Zuführstelle von Kabeladern nach hinten verschiebbar ist.

7. Datentechnik-Verteiler nach einem der vorstehenden Ansprüche, **dadurch gekennzeichnet, dass** am Verteiler flexible Streben (82) vorgesehen sind, an deren Ende jeweils eine Kabelschelle (36) angeordnet ist.

8. Datentechnik-Verteiler nach einem der vorstehenden Ansprüche, **dadurch gekennzeichnet, dass** Kabelhalteclips (32) zum Aufnehmen von Kabeln (30) vorgesehen sind, wobei die Kabelhalteclips (32) wenigstens teilweise eine flexible Strebe (82) aufweisen, an deren Ende eine Kabelschelle (36) angeordnet ist.

9. Datentechnik-Verteiler nach Anspruch 8, **dadurch gekennzeichnet, dass** die flexible Strebe (82) einstückig an den Kabelhalteclip (32) angespritzt ist.

## Claims

1. A data technology distributor for installation in a cabinet, comprising connector terminals (54) for applying cable wires and at least one plug-in socket (14) having plug-in socket contacts for contacting data cable plugs and means for electrical connecting the connector terminals (54) and the plug-in socket contacts, wherein the means for electrical connecting of connector terminals (54) and plug-in socket contacts include releasable plug-in connectors, **characterized in that** the releasable plug-in connectors include socket-type and pin-type plug-in elements (74, 50) provided on the one hand in a connector terminal block (40) and on the other hand on a circuit board (46), wherein the connector terminal block (40) and the circuit board (46) are provided with guiding means (48, 62), to ensure defined relative movement between connector terminal block (40) and circuit board (46) during connecting the pin-type and the socket-type plug-in elements (74, 50).

2. The data technology distributor according to claim 1, **characterized in that** the circuit board (46) together with at least one plug-in socket (14) is a constructional unit.

3. The data technology distributor according to claim 2, **characterized in that** the circuit board (46) includes a support part (16) which defines a cavity for accommodation of a plug-in socket (14) between the support part and the circuit board (46).

4. The data technology distributor according to at least one of the preceding claims, **characterized in that** the circuit board (46) is provided with at least some of the pin-type plug-in elements (50) of the releasable plug-in connectors, and support elements are provided, in particular on a cover (44), with the support elements extending further away from the circuit board (46), as viewed from the circuit board (46), than the pin-type plug-in elements (50).

5. The data technology distributor according to any one of the preceding claims, **characterized in that** the connector terminal block (40) or the circuit board (46) are disposed on a slide sheet (24) which is displaceable relative to a base plate (18).

6. The data technology distributor according to claim 5, **characterized in that** the connector terminal block (40) is disposed on the slide sheet (24), the circuit board (46) is a constructional unit together with at least one plug-in socket (14), and the slide sheet (24) starting from an end position, in which the plug-in socket (14) is arranged essentially flush with a front face of the distributor, is displaceable from the front face in the direction of the feeding place of cable wires towards the rear.

7. The data technology distributor according to any one of the preceding claims, **characterized in that** flexible bars (82) are provided on the distributor, and in each case one cable clamp (36) is disposed on the bar end.

8. The data technology distributor according to any one of the preceding claims, **characterized in that** cable retention clips (32) for accommodation of cables (30) are provided, wherein the cable retention clips (32) include at least partially a flexible bar (82), and a cable clamp (36) is disposed on the bar end.

9. The data technology distributor according to claim 8, **characterized in that** the flexible bar (82) is injection-molded integrally to the cable retention clip (32).

## Revendications

1. Répartiteur informatique destiné à être monté dans une armoire et présentant des bornes de raccordement (54) permettant de placer des fils de câble et au moins une douille enfichable (14) dotée de contacts de douille enfichable qui assurent le contact avec les fiches de câble de données et
des moyens de raccordement électrique des bornes de raccordement (54) et des contacts de douille enfichable,
les moyens de raccordement électrique des bornes de raccordement (54) et des contacts de douille enfichable présentant des raccords enfichables libérables,
**caractérisé en ce que**
les raccords enfichables libérables présentent des éléments d'enfichage (74, 50) de type douille et de type tige qui sont prévus d'une part dans un bloc (40) de bornes de raccordement et d'autre part sur une carte de circuit (46),
**en ce que** le bloc (40) de bornes de raccordement et la carte de circuit (46) est doté de moyens de guidage (48, 62) qui assurent un déplacement relatif défini entre le bloc (40) de bornes d'enfichage et la carte de circuit (46) lors de la liaison des éléments d'enfichage de type tige et des éléments d'enfichage de type douille (74, 50).

2. Répartiteur informatique selon la revendication 1, **caractérisé en ce que** la carte de circuit (46) forme une entité avec au moins une douille enfichable (14).

3. Répartiteur informatique selon la revendication 2, **caractérisé en ce que** la carte de circuit (46) présente une pièce de soutien (16) qui définit un espace de reprise d'une douille enfichable (14) entre elle-même et la cartouche de circuit (46).

4. Répartiteur informatique selon au moins l'une des revendications précédentes, **caractérisé en ce que** la carte de circuit (46) est dotée d'au moins certains des éléments d'enfichage (50) de type tige des raccords enfichables libérables et **en ce que** des éléments de soutien qui s'étendent plus loin de la carte d'enfichage (46) que les éléments d'enfichage (50) de type tige sont prévus en particulier sur un capot (44).

5. Répartiteur informatique selon l'une des revendications précédentes, **caractérisé en ce que** le bloc (40) de bornes de raccordement ou la carte de circuit (46) sont disposés sur une plaque coulissante (24) qui peut coulisser par rapport à une plaque de base (18).

6. Répartiteur informatique selon la revendication 5, **caractérisé en ce que** le bloc (40) de bornes de raccordement est disposé sur la plaque coulissante (24), **en ce que** la carte de circuit (46) forme une entité avec au moins une douille enfichable (14) et **en ce que** la plaque coulissante (24) peut coulisser vers l'arrière depuis le côté frontal en direction de l'emplacement d'amenée des fils de câble en partant d'une position d'extrémité dans laquelle la douille enfichable (14) est disposée essentiellement à chant par rapport au côté frontal du répartiteur.

7. Répartiteur informatique selon l'une des revendications précédentes, **caractérisé en ce que** des entretoises flexibles (82) à l'extrémité de chacune desquelles est disposée une bride de câble (36) sont prévues sur le répartiteur.

8. Répartiteur informatique selon l'une des revendications précédentes, **caractérisé en ce que** des pinces (32) de maintien de câble sont prévues pour reprendre des câbles (30), au moins certaines pinces (32) de maintien de câble présentant une entretoise flexible (82) à l'extrémité de laquelle est disposée une bride de câble (36).

9. Répartiteur informatique selon la revendication 8, **caractérisé en ce que** l'entretoise flexible (82) est moulée par injection d'un seul tenant avec la pince (32) de maintien de câble.
